(19) **Europäisches Patentamt / European Patent Office / Office européen des brevets**

(11) **EP 2 163 903 A1**

(12) **EUROPEAN PATENT APPLICATION**
published in accordance with Art. 153(4) EPC

(43) Date of publication:
**17.03.2010 Bulletin 2010/11**

(21) Application number: **08764363.1**

(22) Date of filing: **20.05.2008**

(51) Int Cl.:
**G01P 3/486** *(2006.01)*    **B60C 13/00** *(2006.01)*
**B60C 19/00** *(2006.01)*

(86) International application number:
**PCT/JP2008/059203**

(87) International publication number:
**WO 2009/013928 (29.01.2009 Gazette 2009/05)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **26.07.2007 JP 2007194911**

(71) Applicant: **Sumitomo Rubber Industries, Ltd. Kobe-shi, Hyogo 651-0072 (JP)**

(72) Inventors:
• **HINO, Hidehiko**
  **Kobe-shi**
  **Hyogo 651-0072 (JP)**
• **KUBOTA, Yasuhiro**
  **Kobe-shi**
  **Hyogo 651-0072 (JP)**

(74) Representative: **Manitz, Gerhart**
  **Manitz, Finsterwald & Partner GbR**
  **Martin-Greif-Strasse 1**
  **80336 München (DE)**

(54) **DEVICE FOR MEASURING ANGULAR VELOCITY OF TIRE**

(57)    A device for measuring angular velocity of a rotating tire, comprising a plurality ("m" pieces) of light reflection marks (3) disposed on an outer surface of a sidewall portion (2s) of a tire (2) so as to be located on a circumference line (j) of a single circle centered on a tire axis (i), a light sensor (5) fixed to a vehicle body (4) and capable of detecting passing of the light reflection marks (3) rotating with the tire (2), and a calculation means (7) for calculating the angular velocity Vr of the tire (2) by detecting passing of the light reflection marks (3) with the light sensor (5).

**FIG.1**

EP 2 163 903 A1

**Description**

TECHNICAL FIELD

The present invention relates to a device for measuring an angular velocity of a tire in which a plurality of light reflection marks are provided on an outer surface of a sidewall portion of the tire to measure the angular velocity of the rotating tire.

BACKGROUND ART

In recent years, various vehicle control systems such as ABS (antilock braking system), TCS (traction control system), ESC (electronic stability control) have been developed in order to secure stability and safety of a running automobile. It is required for controlling these systems to exactly know a rolling state of tires during running. Besides a rotation velocity (angular velocity) of the tire, it is proposed to directly sense forces acting on a tire during running such as forward and backward forces, lateral force, and upward and downward loads by attaching sensors to the tire itself, as disclosed for example in Patent Literatures 1 and 2.

    Patent Literature 1: JP-A-2005-126008
    Patent Literature 2: JP-A-2006-064565

DISCLOSURE OF THE INVENTION

Problem to be Solved by the Invention

On the other hand, for measurement of the angular velocity of tire is conventionally adopted a method in which a gear is attached to an axle and the number of teeth is counted by a sensor. However, since a tire is an elastic body and a twist deformation generates between the axle and a tread portion of the tire owing to forward and backward forces and the like, the angular velocity cannot be accurately measured by the conventional method. Therefore, the conventional method has a problem that data such as forces acting on a tire obtained by attaching sensors to the tire itself cannot be sufficiently and effectively utilized to the vehicle control systems.

Accordingly, it is an object of the present invention to provide a device for measuring an angular velocity of a tire which can measure the angular velocity of tire with good accuracy and, moreover, which enables to previously build up, in the tire itself, systems for detecting the forces as mentioned above acting on the tire and the angular velocity of the tire so as to easily achieve matching of sensing accuracy and responsiveness of respective systems. The present invention is based on providing a plurality of light reflection marks on the outer surface of a sidewall portion.

Means to Solve the Problem

The invention as claimed in claim 1 of the present application is directed to a device for measuring the angular velocity of a rotating tire, characterized by including:

    a plurality ("m" pieces) of light reflection marks disposed on an outer surface of a sidewall portion of the tire so as to be located on a circumference line of a single circle centered on the axis of the tire,
    a light sensor fixed to a vehicle body and capable of detecting passing of the light reflection marks rotating with the tire, and
    a calculation means for calculating the angular velocity of the tire by detecting passing of the light reflection marks with the light sensor.

Effect of the Invention

As stated above, the present invention is provided with a plurality ("m" pieces) of light reflection marks disposed on an outer surface of a sidewall portion of a tire, a light sensor capable of detecting passing of the light reflection marks, and a calculating means for calculating the angular velocity of the tire by detection of the passing. Specifically, a passing time $\Delta t$ that a light reflection mark takes to pass the light sensor from one side edge up to the other side edge of the light reflection mark in the circumferential direction, is measured, and the angular velocity Vr of the tire is then calculated from the passing time $\Delta t$ of the light reflection mark. Alternatively, a passing time $\Delta T$ that a light reflection mark takes to pass the light sensor from a circumferential one side edge of the light reflection mark up to a circumferential one side edge of another light reflection mark adjacent in the circumferential direction, is measured, and the angular velocity Vr of the tire is calculated from the passing time $\Delta T$ of the light reflection mark.

Since the angular velocity is measured on the tire itself, it is possible to accurately know the angular velocity suitable for the vehicle control systems, that is to say, the angular velocity of a tire under an actually rotating condition, so it is helpful for enhancing the accuracy of control of the vehicle control systems. Further, it is possible to previously build up an angular velocity detecting system in only a tire together with a system for detecting a force acting on the tire during running, so it is possible to easily achieve matching of the sensing accuracy and the responsiveness of the respective systems.

BRIEF DESCRIPTION OF THE DRAWINGS

Fig. 1 is a vertical sectional view of a portion including an axle for illustrating an embodiment of a tire angular velocity measuring device according to the present invention;

Fig. 2 is a side view of a tire viewed from the inside of a vehicle body;

Fig. 3 is a partial side view showing light reflection marks in a first embodiment;

Fig. 4 is a graph showing conceptually a signal of detection of the light reflection marks in the first embodiment;

Fig. 5 is a side view of a light reflection mark showing exaggeratingly a change in a passing position of a light sensor depending on the rotation velocity;

Fig. 6 is a side view illustrating a distance A between light sensors in the case where a plurality of the light sensors are disposed;

Fig. 7 is a partial side view showing a case where one light reflection mark has a circumferential width different from that of the remaining light reflection marks;

Fig. 8 is a partial side view showing light reflection marks in a second embodiment;

Fig. 9 is a graph showing conceptually a signal of detection of the light reflection marks in the second embodiment;

Fig. 10 is a graph showing a result of the detection in Example 1;

Fig. 11 is a graph showing a result of the detection in Example 2;

Fig. 12 is a graph showing a result of the detection in Example 3; and

Fig. 13 is a graph showing a result of the detection in Example 3.

Explanation of Symbols

1. Device for measuring angular velocity of tire
2. Tire
2s. Sidewall portion
3. Light reflection mark
3a. First light reflection mark
3b. Second light reflection mark
4. Vehicle body
5. Light sensor
7. Calculation means
7A. Measuring part
7B. Calculating part
e1. One side edge in the circumferential direction
e2. The other side edge
i. Axis of tire
j. Circumference line of circle

BEST MODE FOR CARRYING OUT THE INVENTION

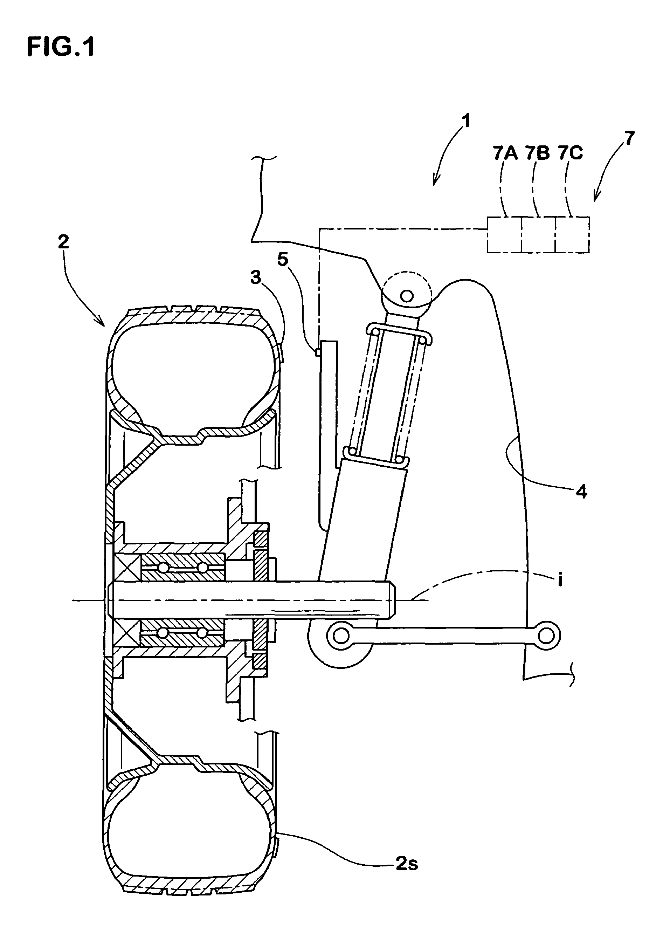

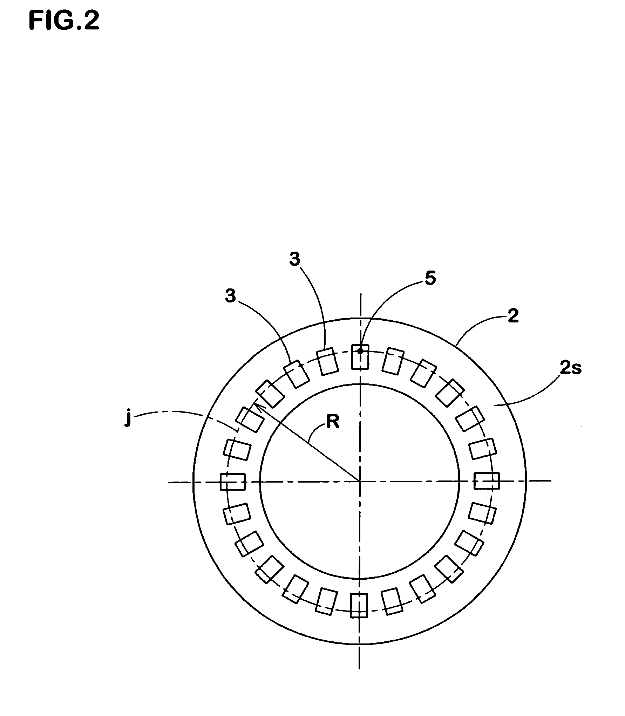

An embodiment of the present invention will be explained with reference to the accompanying drawings. Fig. 1 is a schematic cross sectional view showing a tire angular velocity measuring device of the present invention, and Fig. 2 is a schematic side view of a tire viewed from the inside of a vehicle body.

As shown in Fig. 1, a tire angular velocity measuring device 1 of the present invention is a device for measuring the angular velocity of a rotating tire 2, and includes:

a plurality ("m" pieces) of light reflection marks 3 disposed on an outer surface of a sidewall portion 2s (hereinafter referred to as "sidewall surface") of the tire 2 so as to be located on a circumference line "j" (shown in Fig. 2) of a single circle centered on a tire axis "i",

at least one light sensor 5 fixed to a vehicle body 4 and capable of detecting passing of the light reflection marks 3 rotating with the tire 2, and

a calculation means 7 for calculating an angular velocity Vr of the tire 2 by detecting passing of the light reflection marks 3 with the light sensor 5.

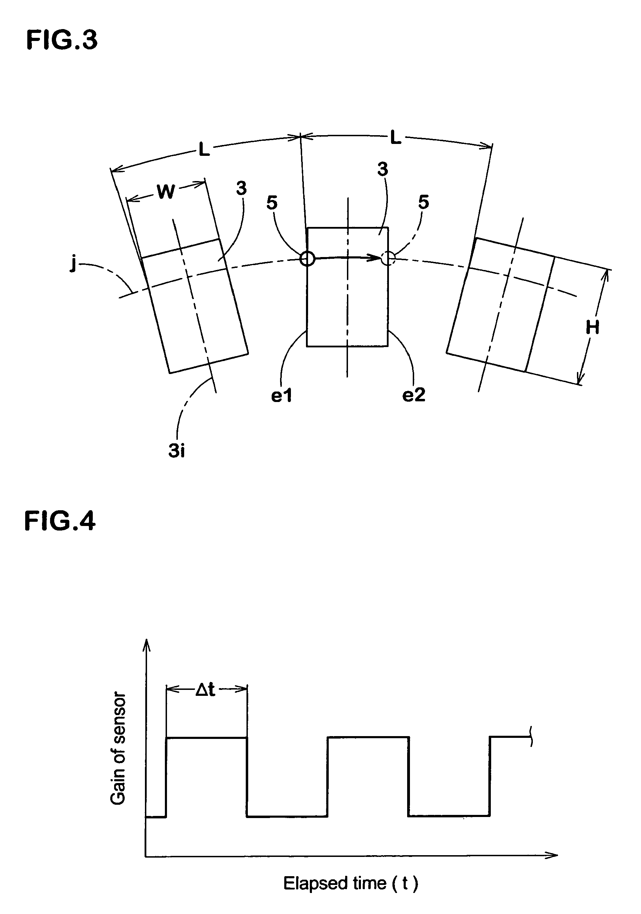

As shown in Fig. 3 in an enlarged form, the light reflection marks 3 used in this embodiment are in the form of a rectangle having a constant circumferential width W, namely a rectangle that a circumferential one side edge e1 and a circumferential the other side edge e2 are parallel to each other. Each light reflection mark 3 is disposed so that the width center line 3i thereof is directed to the tire axis "i", in other words, the width center line 3i extends in the radial direction of tire. In this embodiment, since the angle of rotation of the tire is also measured as well as the angular velocity Vr, the respective light reflection marks 3 have the same width W and are disposed at regular intervals such that a circumferential distance L between the circumferential one side edge e1 located on one side of a mark 3 and the circumferential one side edge e1 located on one side of an adjacent mark 3 is constant. The term "distance L" means a distance measured along the circumference line "j".

The light reflection marks 3 can be formed by attaching sheet-like reflectors to the sidewall surface so long as the reflectors have a flexibility capable of deforming according to the profile of the sidewall portion 2s, or by applying a paint or the like to the sidewall surface. Further, as to way of reflection, various reflectors of diffuse reflection type, specular reflection type and retro-reflection type can be used so long as they can reflect a sensor light radiated from a light sensor 5 toward the light sensor 5. The sidewall surface has a convex curvature and the shape of curvature variously changes owing to, for example, tire inflation pressure, loading condition in running, running velocity and the like. Therefore, reflectors of retro-reflection type which can reflect an incident light back to a light source even in the case that the angle of reflection surface and the shape of curved surface have changed are the most preferably used from the viewpoint that they can accurately detect passing of the light reflection marks 3 with a high accuracy. As the reflectors of retro-reflection type can be used any of retroreflectors, i.e., retroreflectors of beads type wherein transparent spherical reflector elements such as glass beads are disposed on a sheet-like substrate, and retroreflectors of prism type wherein trihedral prism reflector elements are disposed on a sheet-like substrate.

The light sensor 5 is attached to the vehicle body 4 at a location capable of opposing the light reflection marks 3. In this embodiment is shown a case where the light sensor 5 is attached to a suspension arm of the vehicle body 4, but the location is not limited thereto. The light sensor 5 is a so-called reflection type light sensor, and it is provided with a light emitting element and a light receiving element and performs detection by receiving, with the light receiving element, a light radiated from the light emitting element and reflected from the light reflection mark 3.

The signal of sensing the light reflection mark 3 by the light sensor 5 is input into the calculation means 7 (a computer) to calculate the angular velocity Vr of the tire 2. The calculation means 7 shown in this embodiment is provided with a measuring part 7A for measuring a passing time $\Delta t$ (shown in Fig. 4) that the light reflection mark 3 takes to pass the light sensor 5 from the circumferential one side edge e1 to the circumferential other side edge e2 of the light reflection mark 3, and a calculating part 7B for calculating the angular velocity Vr of the tire from the passing time $\Delta t$ according to the following equation (1):

$$Vr = (360/2\pi R) \times (W/\Delta t) \qquad (1)$$

wherein the unit of the passing time $\Delta t$ is second, the unit of the angular velocity Vr is degree/second, n is a circular constant, and R is a distance from the tire axis "i" to the light sensor 3.

In Fig. 3, for convenience sake, it is shown such that the light sensor 5 moves and passes through the light reflection mark 3 from its one side edge e1 to the other side edge e2. Also, in Fig. 4, signals of sensing the light reflection marks 3 by the light sensor 5 are conceptually shown and are in the form of a rectangular wave. A passing velocity V of the light reflection mark 3 can be represented by an equation V = W/$\Delta t$, and if the passing velocity V is converted into the angular velocity Vr, the equation (1) is obtained.

Like this, in the tire angular velocity measuring device 1 of this embodiment (first embodiment), the angular velocity Vr of tire is detected by measuring a time $\Delta t$ required for one light reflection mark 3 to pass a light sensor 5 from start of the passing up to completion of the passing, and calculating from the time $\Delta t$. Therefore, if at least the respective light reflection marks 3 have the same width W, the angular velocity Vr can be accurately detected even if the respective distances L between circumferential one side edges e1, e1 are not constant. That is to say, there is an advantage that the detection is not affected by an error in fixing the light reflection marks 3. By carrying out this detection for all light reflection marks 3 on the circumferential line "j", an instantaneous change in angular velocity of a tire during running, e.g., skid, can be accurately detected.

The larger the circumferential width W of the light reflection mark 3, the more preferable since time measuring accuracy in high speed rotation is enhanced. However, if the circumferential width W is too large, the light reflection marks 3 may be broken when they cannot follow a deformation of the sidewall portion 2s to generate a strain. Also, a problem may arise that the number "m" of light reflection marks 3 disposed is decreased and, as a result, an instantaneous change in angular velocity cannot be detected at the time of low speed rotation. From such points of view, it is preferable that the circumferential width W is from 3 to 15 mm, and it is more preferable that as to the lower limit, the width W is 7 mm or more, and as to the upper limit, the width W is 10 mm or less.

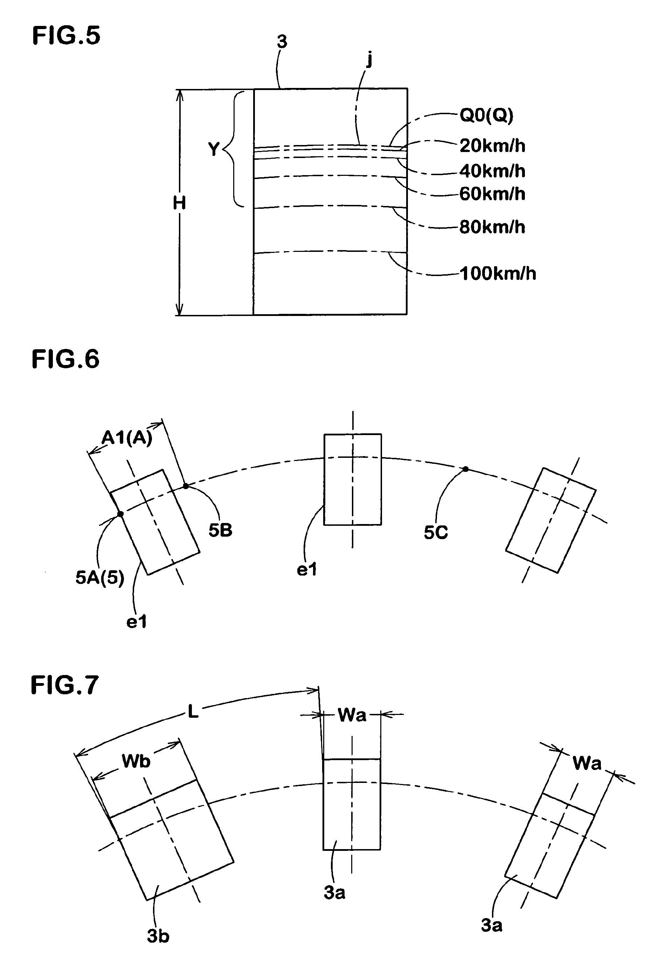

At the time of high speed rotation of the tire 2, the sidewall portion 2s tends to be pulled radially outwardly and, therefore, as shown exaggeratingly in Fig. 5, a passing position Q of the light sensor 5 shifts radially inwardly or outwardly depending on the rotation velocity. In consideration of this shift, it is preferable that a radial height H of the light reflection marks 3 is at least 5 mm, especially at least 7 mm, more especially at least 10 mm. If the height H is too large, the light reflection marks 3 may be broken when they cannot follow a deformation of the sidewall portion 2s. Therefore, as to the upper limit, it is preferable that the height H is 18 mm or less, especially 15 mm or less. Further, it is preferable to attach the light reflection marks 3 so that a passing position Q0 of the light sensor 5 at the time of parking or stoppage is located in a region Y which is radially outward of a middle point of the height of the light reflection mark 3. Since the circumferential width W in this embodiment is constant as stated above, the light sensor 5 can always pass the same distance even if the passing position Q of the light sensor 5 radially fluctuates and, therefore, the measurement accuracy can be maintained high.

The larger the number "m" of the light reflection marks 3 disposed, the larger the number of detections per one revolution, so a time lag is shortened and the detection accuracy is enhanced. If the number "m" of the light reflection marks 3 disposed is 32, it is possible to detect the angular velocity at a rate of about one time/second even in the case of running at a low speed of 0.2 km/hour by a usual passenger car. Therefore, it is possible to avoid troubles such as delay of detection owing to a rapid change in speed and failure of detection of speed change itself. Therefore, it is preferable that the number "m" of the light reflection marks 3 to be disposed is at least 32, especially at least 64, more especially at least 128. On the other hand, if the number "m" of the light reflection marks 3 disposed is too large, the circumferential width W of the light reflection marks 3 must be decreased and measurement error of passing time tends to increase to lower the accuracy. Further, it brings about disadvantages from the viewpoints of production and cost of the light reflection marks 3 and the number of fixing works. Therefore, it is preferable that the number "m" of the light reflection marks 3 to be disposed is at most 512, especially at most 256.

In this embodiment, for the purposes of measuring the angle of rotation of the tire as well as the angular velocity Vr, the respective circumferential distances L between the circumferential one side edges e1, e1 are made equal to each other and, furthermore, a plurality of the light sensors 5 are attached to the vehicle body 4, as conceptually shown in Fig. 6, at a circumferential distance A from each other determined by the following equation (3):

$$A = [k + (1/n)] \times L \qquad (3)$$

wherein "k" is an integer of 0 to "m", "m" is the number of light reflection marks 3 disposed, and "n" is the number of light sensors 5 disposed.

An explanation is given below with respect to a case where three (n=3) light sensors 5A, 5B and 5C are attached. In this case, each of three light sensors 5A, 5B and 5C detects passing of the light reflection marks 3. Of these three sensors, however, only one light sensor (e.g., light sensor 5A) is involved in detection of the angular velocity Vr. That is to say, the calculation means 7 measures the passing time $\Delta t$ of the light reflection marks 3 from the detection signal by one light sensor 5A and calculates the angular velocity Vr of the tire based on this passing time $\Delta t$.

The calculation means 7 in this embodiment is further provided with a counting part 7C for counting the number F of passages of the light reflection marks 3 which have passed through the respective light sensors 5A to 5C, by detection signals from the light sensors 5A to 5C. In the counting part 7C in this embodiment, it is judged by detecting the circumferential one side edge e1 of each of the light reflection marks 3 with the light sensor 5 that each of the light reflection marks 3 has passed, thus counting the number F of the passages. However, it is also possible to judge that a light reflection mark 3 has passed, by detection of the circumferential the other side edge e2. The three light sensors 5A, 5B and 5C are attached at an interval of distance A determined by the equation (3). Specifically, the light sensor 5B is disposed at a distance A1 from an adjacent light sensor 5A, and the light sensor 5C is disposed at a distance A2 from the adjacent light sensor 5B. In this embodiment is shown the following case.

$$A1 = [0 + (1/3)] \times L = (1/3) \times L$$

$$A2 = [1 + (1/3)] \times L = (4/3) \times L$$

In this case, as the integer "k" for the distance A1 is adopted k=0, and as the integer "k" for the distance A2 is adopted k=1. Like this, different integers "k" can be adopted between the distance A1 and the distance A2.

The passage number counting part 7C measures the rotation angle θ (unit: degree) of tire by summing up the passage number F1 measured by the light sensor 5A, the passage number F2 measured by the light sensor 5B and the passage number F3 measured by the light sensor 5C, and calculating according to the following equation (4):

$$\theta = [360 \times (F1 + F2 + F3)]/(3 \times m) \qquad (4)$$

That is to say, if the resolution is 360/m when the number "n" of light sensors 5 disposed is one, the resolution can be increased to 120/m when the disposition number "n" is three. Like this, the resolution can be increased to "n" times by disposing "n" pieces of the light sensors 5 at a distance A from each other in the circumferential direction of tire. This is particularly advantageous, as mentioned above, in the tire angular velocity measuring device 1 of the present invention which is subject to restrictions in the disposition number "m" from the viewpoints of measurement error of the passing time Δt and the like. The resolution of the rotation angle θ can be easily enhanced without inviting increase in the disposition number "m", that is, without inviting lowering in accuracy of measuring the angular velocity Vr.

Further, in this embodiment is shown a case where the light reflection marks 3 have the same circumferential width W measured on the circumferential line "j". However, for example, only one light reflection mark 3 may have a circumferential width W different from that of the other light reflection marks 3, as shown in Fig. 7. In other words, the light reflection marks 3 may be composed of a plurality of first light reflection marks 3a having the same circumferential width Wa, and one second light reflection mark 3b having a circumferential width Wb different from that of the first light reflection marks 3a. The circumferential width Wa of the first light reflection mark 3a is smaller than the distance L mentioned above.

In case of using such light reflection marks 3, the second light reflection mark 3b can be used as a base point for one revolution of the tire, and it is possible to detect an absolute angular position of the tire based on the base point as an origin. Measurement of the absolute angular position would be particularly effective, since it is indispensable for sensing forces acting on a tire during running by attaching a sensor such as a strain sensor to the tire itself as proposed for example in the Patent Literatures 1 and 2.

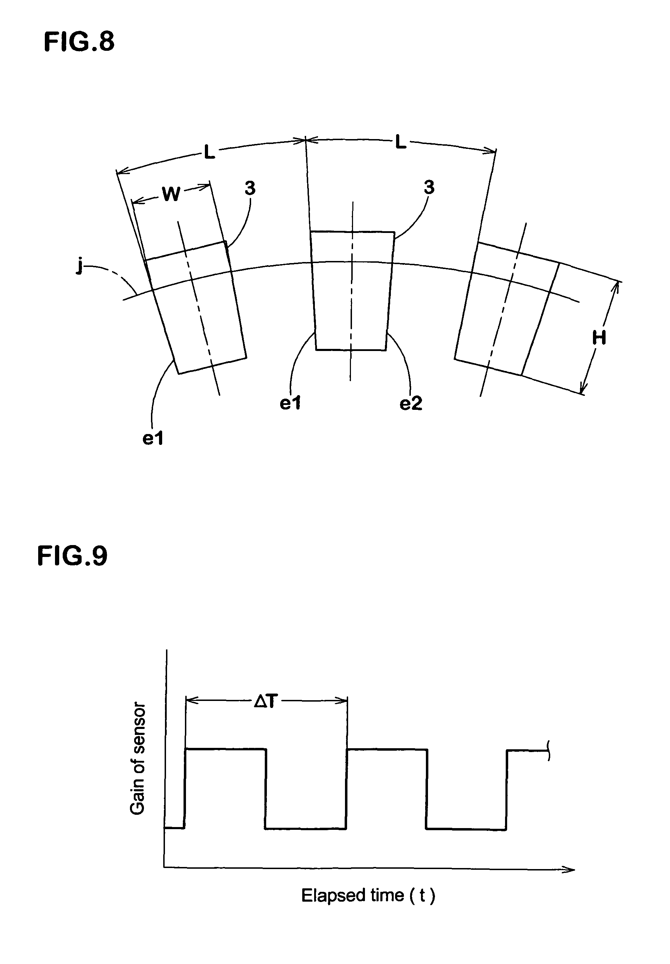

A second embodiment of the tire angular velocity measuring device 1 of the present invention will be explained. In the second embodiment, the light reflection marks 3 are formed so that, as shown in Fig. 8, at least the circumferential one side edge e1 is pointed at the tire axis "i" (that is, extends in the radial direction of tire). In this embodiment shown in Fig. 8, the light reflection marks 3 are formed into an approximately fan-like form that both the circumferential one side edge e1 and the circumferential the other side edge e2 are directed to the tire axis. The light reflection marks 3 are disposed at regular intervals such that each circumferential distance L between the circumferential one side edges e1, e1 is constant. The term "distance L" means a distance measured along the circumference line "j".

The calculation means 7 shown in this embodiment is provided with a measuring part 7A for measuring a passing time ΔT (shown in Fig. 9) that a light reflection mark 3 takes to pass the light sensor 5 from a circumferential one side edge e1 of the light reflection mark 3 to a circumferential one side edge e1 of the other light reflection mark 3 adjacent in the circumferential direction, and a calculating part 7B for calculating the angular velocity Vr of the tire from the passing time ΔT according to the following equation (2):

$$Vr = (360/m) \times (1/\Delta T) \qquad (2)$$

wherein the unit of the passing time ΔT is second, and the unit of the angular velocity Vr is degree/second.

In Fig. 9, signals of sensing the light reflection marks 3 by the light sensor 5 are conceptually shown and are in the form of a rectangular wave. A passing velocity V of the light reflection mark 3 can be represented by an equation V = L/ΔT, and when the passing velocity V is converted into the angular velocity Vr, the equation (2) is obtained.

Like this, in the tire angular velocity measuring device 1 of the second embodiment, the angular velocity Vr of tire is detected by measuring a time ΔT required for one light reflection mark 3 from start of passing one light sensor 5 up to start of passing an adjacent light sensor 5, and calculating from the time ΔT. Therefore, in case of the second embodiment, if the respective distances L between circumferential one side edges e1, e1 are constant, the angular velocity Vr can be accurately detected even if the respective light reflection marks 3 have different widths W. The time ΔT can be measured as a frequency "f" (times/second) at the time of sensing the circumferential one side edge e1. In this case, calculation according to the equation (2) is of course conducted under condition of ΔT = 1/f.

The width of the light reflection mark 3 is not particularly important in the second embodiment, but it is preferable that the circumferential width W on the circumferential line "j" is from 2 to 15 mm. If the circumferential width W is less than 2 mm, there is a tendency that the reflected light may become weak due to too narrow width and, therefore, it is hard to detect the circumferential one side edge e 1 or the detection accuracy is lowered. If the width W is more than 15 mm, the light reflection marks 3 may be broken when they cannot follow a deformation of the sidewall portion 2s to generate a strain. From such points of view, it is more preferable that as to the lower limit, the width W is 4 mm or more, and as to the upper limit, the width W is 10 mm or less.

Like in the first embodiment, in consideration of shift of the light reflection marks 3 in the radial direction owing to centrifugal force, it is preferable that a radial height H of the light reflection marks 3 is at least 5 mm, especially at least 7 mm, more especially at least 10 mm. Further, in consideration of breaking, it is preferable that the radial height H is at most 18 mm, especially at most 15 mm. Further, it is preferable to attach the light reflection marks 3 so that a passing position Q0 of the light sensor 5 at the time of parking or stoppage is located in a region Y which is radially outward of a middle point of the height of the light reflection mark 3.

The larger the number "m" of the light reflection marks 3 disposed, the larger the number of detections per a rotation, so a time lag is shortened and the detection accuracy is enhanced. If the number "m" of the light reflection marks 3 disposed is 64, it is possible to detect the angular velocity at a rate of about one time/second even in the case of running at a low speed of 0.2 km/hour by a usual passenger car. Therefore, it is possible to avoid troubles such as delay of detection owing to a rapid change in speed and failure of detection of speed change itself. Therefore, it is preferable that the number "m" of the light reflection marks 3 to be disposed is at least 64, especially at least 128. On the other hand, if the number "m" of the light reflection marks 3 disposed is too large, it brings about disadvantages from the viewpoints of production and production cost of the light reflection marks 3 and the number of fixing works. Therefore, it is preferable that the number "m" of the light reflection marks 3 to be disposed is at most 512, especially at most 256.

In this embodiment, both the circumferential one side edge e1 and the other side edge e2 are pointed at the tire axis "i", whereby when a vehicle is driven in reverse (when a tire rotates inversely), it is possible to detect passing of the circumferential the other side edge e2 by the light sensor 5, that is, it is possible to measure the angular velocity in backing a vehicle.

Like in the first embodiment, a plurality ("n" pieces) of the light sensors 5 can be attached to the vehicle body 4 in the second embodiment, too, as conceptually shown in Fig. 6, at intervals of a circumferential distance A determined by the equation (3) mentioned above, for the purposes of measuring the angle of rotation of the tire as well as the angular velocity Vr. Thus the resolution of the rotation angle θ can be enhanced to "n" times without inviting increase in the disposition number "m" of the light reflection marks 3. Further, when as the light reflection marks 3 are used those composed of a plurality of first light reflection marks 3a having a circumferential width Wa equal to each other, and one second light reflection mark 3b having a circumferential width Wb different from that of the first light reflection marks 3a, it is possible to detect an absolute angular position of a tire.

While particularly preferable embodiments of the present invention have been described, the present invention can be modified into various embodiments and carried out without being limited to only the embodiments shown in the drawings.

EXAMPLES

Example 1

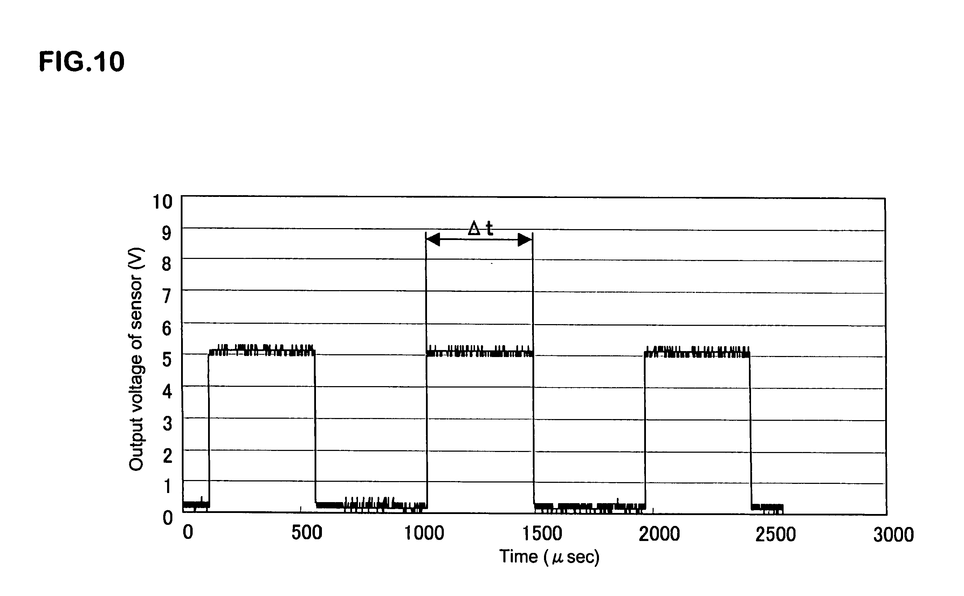

Light reflection marks of retro-reflection type were attached to an outer surface of a sidewall portion of a tire (tire size 245/40R18) mounted on a rim and inflated to an inner pressure of 200 kPa, according to specifications mentioned below, at regular intervals L as shown in Figs. 2 and 3 so that width center lines of the light reflection marks were directed to the tire axis. The tire was rotated on a drum at a running speed of about 60 km/hour, and passing of the light reflection marks was detected by a commercially available light sensor of reflection type. The detection results are shown in Fig. 10.
[Light reflection marks]
Shape: rectangle
Circumferential width (W): 7.8 mm
Radial height (H): 12.0 mm

Number of marks attached (m): 128
[Light sensor]
Disposition number (n): 1
Distance (R) from tire axis to the sensor: 298 mm

Passing time $\Delta t$ from a circumferential one side edge of a light reflection mark to the other side edge thereof was about 480 $\mu$sec. The angular velocity Vr can be obtained from the equation (1) as follows:

$$Vr = (360/2\pi R) \times (W/\Delta t) = 3.12 \text{ deg/msec}$$

Example 2

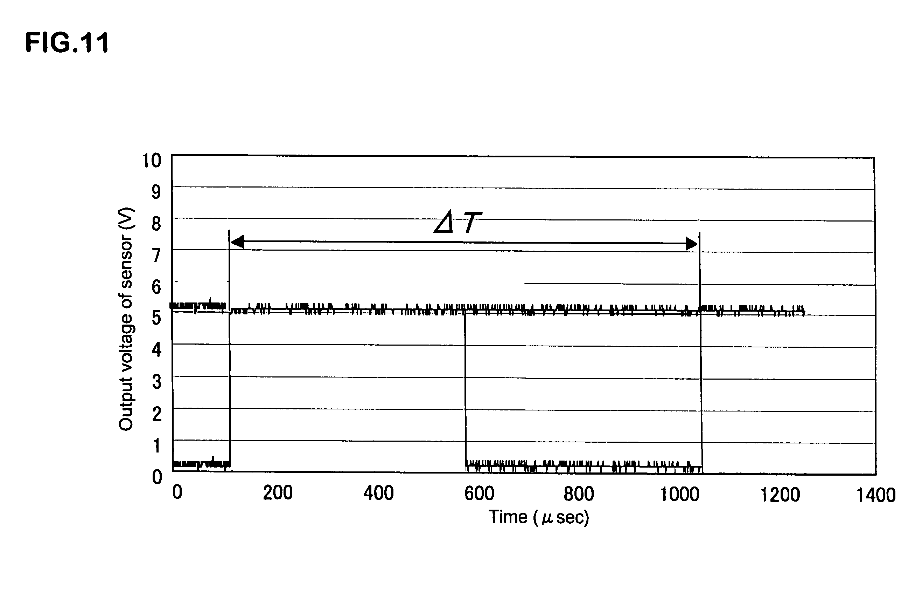

Light reflection marks of retro-reflection type were attached to an outer surface of a sidewall portion of a tire (tire size 245/40R18) mounted on a rim and inflated to an inner pressure of 200 kPa, according to specifications mentioned below, at a circumferential constant distance L between adjacent circumferential one side edges as shown in Fig. 8 so that circumferential one side edges of the light reflection marks were directed to the tire axis. The tire was rotated on a drum at a running speed of about 60 km/hour, and passing of the light reflection marks was detected by a commercially available light sensor of reflection type. The results are shown in Fig. 11.
[Light reflection marks]
Shape: fan-like shape
Circumferential width (W): 7.8 mm
Radial height (H): 10.0 mm
Number of marks attached (m): 128
[Light sensor]
Disposition number (n): 1
Passing time $\Delta T$ from a circumferential one side edge of a light reflection mark to a circumferential one side edge of another light reflection mark adjacent in the circumferential direction of the tire was about 956 $\mu$sec. The angular velocity Vr can be obtained from the equation (2) as follows:

$$Vr = (360/m) \times (1/\Delta T) = 2.942 \text{ deg/msec}$$

Example 3

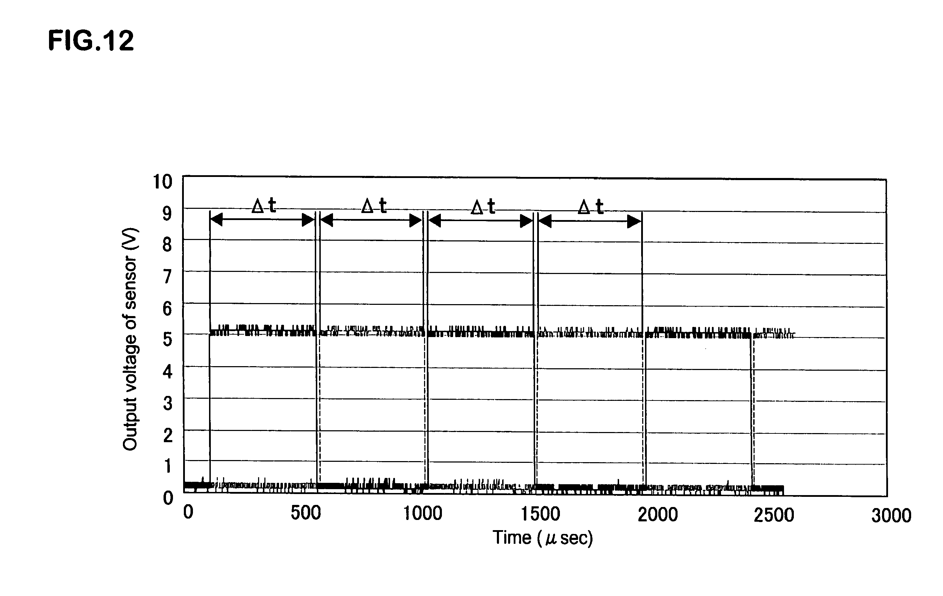

The tire used in Example 2 was rotated on the drum at a running speed of about 60 km/hour, and passing of the light reflection marks was detected by using two light sensors (n = 2). The results are shown in Fig. 12. The light sensors were attached at a circumferential distance A (= 7.8 mm) determined by the following equation (3):

$$A = [k + (1/n)] \times L \qquad (3)$$

wherein k = 0, n = 2, and L = 15.6 mm. In this case, the resolution of measurement can be enhanced to two times the resolution of the case using one light sensor.

Example 4

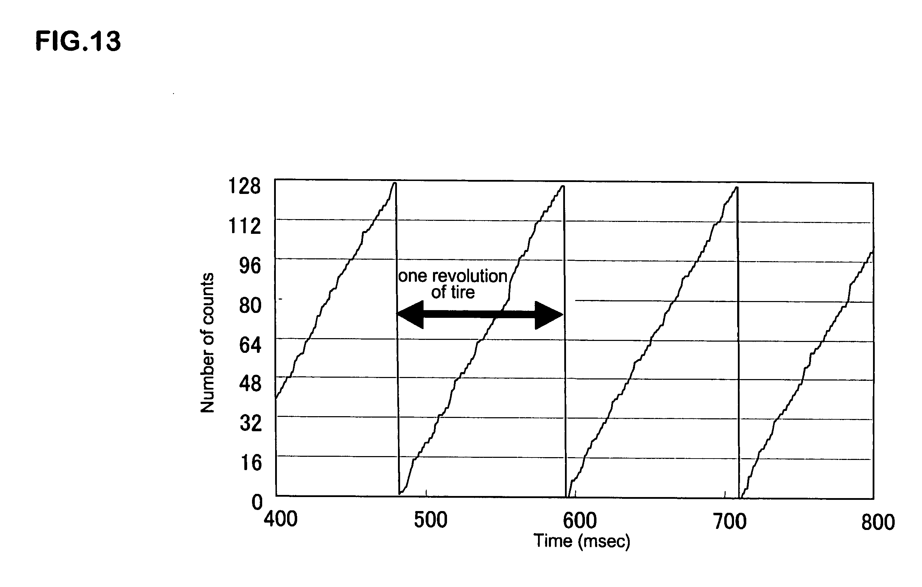

The tire used in Example 2 was rotated on the drum at a running speed of about 60 km/hour, and passing of the light reflection marks was detected by the light sensor. The results are shown in Fig. 13. The number of rotations of the tire can be confirmed by counting the passing of the light reflection marks.

**Claims**

**1.** A device for measuring the angular velocity of a rotating tire, **characterized by** including:

**EP 2 163 903 A1**

a plurality ("m" pieces) of light reflection marks disposed on an outer surface of a sidewall portion of the tire so as to be located on a circumference line of a single circle centered on an axis of the tire,

a light sensor fixed to a vehicle body and capable of detecting passing of the light reflection marks rotating with the tire, and

a calculation means for calculating the angular velocity of the tire by detecting passing of the light reflection marks with the light sensor.

2. The device of claim 1, wherein the light reflection marks are in the form of a rectangle having a constant circumferential width W and are disposed so that width center lines thereof are directed to the axis of the tire, and

the calculation means includes a measuring part for measuring a passing time $\Delta t$ (unit: second) that the light reflection mark takes to pass the light sensor from a circumferential one side edge of the light reflection mark to a circumferential the other side edge of the light reflection mark, and a calculating part for calculating an angular velocity Vr (unit: degree/second) of the tire from the passing time $\Delta t$ according to the following equation (1):

$$Vr = (360/2\pi R) \times (W/\Delta t) \qquad (1)$$

wherein $\pi$ is a circular constant, and R is a distance from the axis of the tire to the light sensor.

3. The device of claim 1, wherein the light reflection marks are in an approximately fan-like form and are disposed so that circumferential one side edges thereof are directed to the axis of the tire and each circumferential distance L between the circumferential one side edges is constant, and

the calculation means includes a measuring part for measuring a passing time $\Delta T$ (unit: second) that the light reflection mark takes to pass the light sensor from a circumferential one side edge of the light reflection mark to a circumferential one side edge of the other light reflection mark adjacent in the circumferential direction of the tire, and a calculating part for calculating an angular velocity Vr (unit: degree/second) of the tire from the passing time $\Delta T$ according to the following equation (2):

$$Vr = (360/m) \times (1/\Delta T) \qquad (2)$$

4. The device of claim 2 or 3, wherein the light reflection marks are disposed at regular intervals such that each circumferential distance L between the circumferential one side edges is constant, and a plurality ("n" pieces) of the light sensors are attached to the vehicle body at a circumferential distance A from each other determined by the following equation (3):

$$A = [k + (1/n)] \times L \qquad (3)$$

wherein "k" is an integer of 0 to "m".

5. The device of any one of claims 1 to 4, wherein the light reflection marks have the same circumferential width on the circumferential line.

6. The device of any one of claims 1 to 4, wherein the light reflection marks comprise a plurality of first light reflection marks having the same circumferential width on the circumferential line, and one second light reflection mark having a circumferential width on the circumferential line which is different from the circumferential width of the first light reflection marks.

# FIG.1

# FIG.2

# FIG.3

# FIG.4

## FIG.5

Q0(Q)
20km/h
40km/h
60km/h
80km/h
100km/h

## FIG.6

A1(A)

5B

5A(5)

e1

e1

5C

## FIG.7

L

Wb

Wa

Wa

3b

3a

3a

## FIG.8

## FIG.9

# FIG.10

EP 2 163 903 A1

# FIG.11

# FIG.12

# FIG.13

EP 2 163 903 A1

## INTERNATIONAL SEARCH REPORT

<table>
<tr><td colspan="2">International application No.<br>PCT/JP2008/059203</td></tr>
</table>

### A. CLASSIFICATION OF SUBJECT MATTER
*G01P3/486*(2006.01)i, *B60C13/00*(2006.01)i, *B60C19/00*(2006.01)i

According to International Patent Classification (IPC) or to both national classification and IPC

### B. FIELDS SEARCHED

Minimum documentation searched (classification system followed by classification symbols)
G01P3/486, B60C13/00, B60C19/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-163224 A (Sumitomo Rubber Industries, Ltd.),<br>10 June, 2004 (10.06.04),<br>Par. Nos. [0001] to [0022]<br>(Family: none) | 1,5<br>2-4,6 |
| Y | JP 2001-4647 A (The Nippon Signal Co., Ltd.),<br>12 January, 2001 (12.01.01),<br>Par. No. [0020]<br>(Family: none) | 2-4,6 |

☐ Further documents are listed in the continuation of Box C.   ☐ See patent family annex.

| * | Special categories of cited documents: | | "T" | later document published after the international filing date or priority date and not in conflict with the application but cited to understand the principle or theory underlying the invention |
|---|---|---|---|---|
| "A" | document defining the general state of the art which is not considered   to be of particular relevance | | | |
| "E" | earlier application or patent but published on or after the international filing date | | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search<br>    19 August, 2008 (19.08.08) | Date of mailing of the international search report<br>    26 August, 2008 (26.08.08) |
|---|---|
| Name and mailing address of the ISA/<br>    Japanese Patent Office | Authorized officer |
| Facsimile No. | Telephone No. |

Form PCT/ISA/210 (second sheet) (April 2007)

**REFERENCES CITED IN THE DESCRIPTION**

**Patent documents cited in the description**

- JP 2005126008 A
- JP 2006064565 A